(19) Europäisches Patentamt
European Patent Office
Office européen des brevets

(11) EP 1 661 957 A1

(12) EUROPEAN PATENT APPLICATION

(43) Date of publication:
31.05.2006 Bulletin 2006/22

(51) Int Cl.:
*C09D 11/00* (2006.01)

(21) Application number: 05025634.6

(22) Date of filing: 24.11.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 30.11.2004 JP 2004346616

(71) Applicant: FUJI PHOTO FILM CO., LTD.
Manami-Ashigara-shi
Kanagawa (JP)

(72) Inventor: Aoshima, Keitaro
Yoshida-cho
Haibara-gun
Shizuoka (JP)

(74) Representative: HOFFMANN EITLE
Patent- und Rechtsanwälte
Arabellastrasse 4
81925 München (DE)

(54) **Ink composition and ink jet recording method**

(57) An ink composition comprising: a dispersion medium; and coloring material particles comprising: primary particles comprising at least a coloring material and a first polymer; and secondary particles not comprising a coloring material, and comprising at least a secondpolymer, wherein the secondary particles are deposited on surfaces of the primary particles, and an ink jet recording method.

FIG. 3

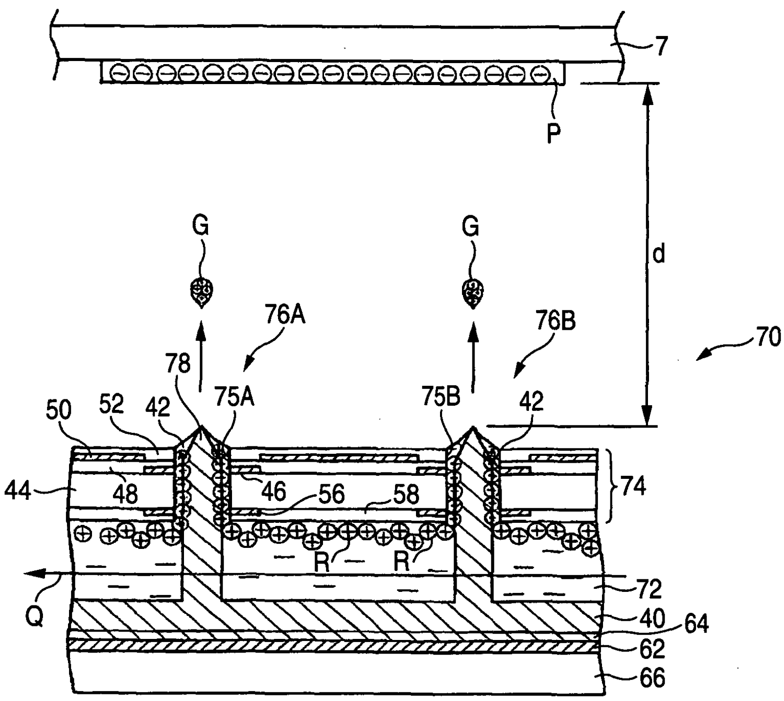


EP 1 661 957 A1

## Description

### Background of the Invention

1. Field of the Invnetion

The present invention relates to an ink composition and an ink jet recording method.

2. Description of the Related Art

As image recording methods for forming an image on a to-be-recorded medium such as paper based on image data signals, there are an electrophotographic method, sublimation type and melting type heat transfer methods, an ink jet method, and the like. The electrophotographic method requires a process for forming an electrostatic latent image on a photoconductor drum by charging and light exposure, so that the systembecomes complicated, resulting in an expensive apparatus. With the heat transfer method, the apparatus is low-priced, but an ink ribbon is used. Therefore, the running cost is high, and waste is produced. On the other hand, with the ink jet method, by a low-priced apparatus, and on only the required image areas, an ink is ejected to perform image formation directly on a to-be-recordedmedium. Therefore, the ink can be used with efficiency, and the running cost is low. Further, the noise is less. Thus, this method is excellent as an image recordingmethod.

The ink jet recording methods include, for example, a method in which ink droplets are flown by the pressure of the vapor generated by the heat of a heat generator, a method in which ink droplets are flown by the mechanical pressure pulse generated by a piezoelectric element, and a method in which ink droplets containing charged particles are flown by utilizing an electrostatic field (see, U.S. Pat. No. 6158844 or Japanese Patent No. 3315334). With the method in which ink droplets are flown by vapor or mechanical pressure, it is not possible to control the direction of flying of the ink droplets. Thus, it is difficult to land ink droplets with precision on the desirable positions on a to-be-printed medium by the distortion of an ink nozzle, or the convection of the air.

On the other hand, with the method utilizing an electrostatic field, the direction of flying of ink droplets is controlled by the electrostatic field, and hence, it is possible to land the ink droplets on desirable positions. Thus, the method can form an image formed matter (printed matter) with a high image quality, and hence it is excellent.

As the ink composition for use in ink jet recording utilizing an electrostatic field, an ink composition containing a dispersion medium, and chargedparticles containing at least a coloringmaterial is used (see, U.S. Pat. No. 5952048 and JP-A-8-291267). The ink composition containing a coloring material can form inks of four colors of yellow, magenta, cyan, and black by changing the coloring material, and further, can form a specific color ink of gold or silver. Therefore, it can form a color image formed matter (printed matter), and hence it is useful.

### Summary of the Invention

Generally, the ink composition for use in ink jet recording is manufactured in the following manner. A coloring material and a polymer are heated and kneaded, and then, ground in the dry state, resulting in particles. A dispersion medium and a dispersant are added thereto, so that the particles are wet dispersed together with the dispersionmedium. Further, a charge control agent is added thereto to impart charges to the particles. However, with the conventional ink composition manufactured in this manner, particles are deposited in the nozzle (ejection opening) of the ink jet head of an ink jet recording apparatus, so that clogging unfavorably tends to occur. Further, the particles sediment upon long-term storage, and are not redispersed even with stirring, unfavorably resulting in poor storage stability.

Therefore, an object of the invention is to provide an ink composition capable of solving the foregoing problems. Specifically, it is to provide an ink composition of which the particles are less likely to be deposited in the nozzle of an ink jet head of an ink jet recording apparatus, and which can also be improved in storage stability, by suppressing the interaction acting between the particles contained in the ink composition, for example, when the ink composition is used for ink jet recording, and an ink jet recording method.

The present invention is as follows.

(1) An ink composition comprising:

a dispersion medium; and
coloring material particles comprising:

primaryparticles comprising at least a coloringmaterial and a first polymer; and
secondary particles not comprising a coloring material, and comprising at least a second polymer,

wherein the secondary particles are deposited on surfaces of the primary particles.

(2) The ink composition as described in (1) above, wherein the coloringmaterial particles are charged particles.

(3) An ink jet recording method comprising:

flowing ink droplets by utilizing an electrostatic field with a use of an ink composition as described in (2) above.

(4) The ink composition as described in (1) or (2) above, wherein the first polymer is a polymer comprising at least one of structural units represented by formulae (1) to (4):

Formula (1) 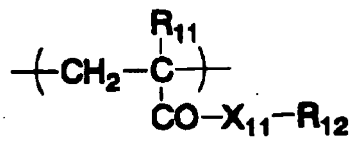

Formula (2) 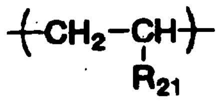

Formula (3) 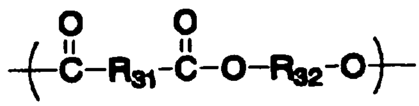

Formula (4) 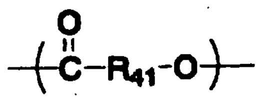

wherein $X_{11}$ represents an oxygen atom or $-N(R_{13})-$;
$R_{11}$ represents a hydrogen atom or a methyl group;
$R_{12}$ represents a hydrocarbon group having 1 to 30 carbon atoms;
$R_{13}$ represents a hydrogen atom or a hydrocarbon group having 1 to 30 carbon atoms;
$R_{21}$ represents a hydrogen atom or a hydrocarbon group having 1 to 20 carbon atoms; and
$R_{31}$, $R_{32}$ and $R_{41}$ each independently represents a divalent hydrocarbon group having 1 to 20 carbon atoms, and wherein in the hydrocarbon groups of $R_{12}$, $R_{21}$, $R_{31}$, $R_{32}$ and $R_{41}$, an ether bond, an amino group, a hydroxy group or a halogen substituent may be contained.

(5) The ink composition as described in any of (1) to (2) and (4) above, which further comprises a graft polymer comprising: a polymer component comprising at least any one of structural units represented by formulae (5) and (6); and a polymer component comprising at least a structural unit represented by formula (7) as a graft chain:

Formula (5)

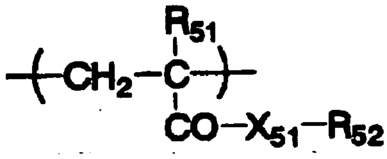

Formula (6)

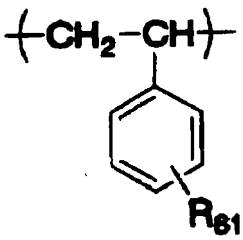

Formula (7)

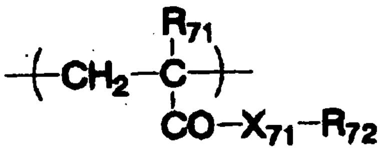

wherein $X_{51}$ represents an oxygen atom or -N($R_{53}$);
$R_{51}$ represents a hydrogen atom or a methyl group;
$R_{52}$ represents a hydrocarbon group having 1 to 10 carbon atoms;
$R_{53}$ represents a hydrogen atom or a hydrocarbon group having 1 to 10 carbon atoms;
$R_{61}$ represents a hydrogen atom, a hydrocarbon group having 1 to 20 carbon atoms, a halogen atom, a hydroxyl group or an alkoxy group having 1 to 20 carbon atoms;
$X_{71}$ represents an oxygen atom or -N($R_{73}$)-;
$R_{71}$ represents a hydrogen atom or a methyl group;
$R_{72}$ represents a hydrocarbon group having 4 to 30 carbon atoms;
$R_{73}$ represents a hydrogen atom or a hydrocarbon group having 1 to 30 carbon atoms, and
wherein in the hydrocarbon groups of $R_{52}$ and $R_{72}$, an ether bond, an amino group, a hydroxy group or a halogen substituent may be contained.
(6) The ink composition as described in any of (1) to (2) and (4) to (5) above, which further comprises a charge control agent.
(7) A method for producing a ink composition, the method comprising:

wet dispersing a mixture of a coloring material and a first polymer with beads for dispersion in a dispersion medium, so as to obtain primary particles; and
adding secondary particles not comprising a coloring material, and comprising at least a second polymer so that the secondary particles are deposited on surfaces of the primary particles.

(8) The method for producing a ink composition as described in (7) above,
wherein the secondary particles are deposited on the surfaces of the primary particles with a heat treatment.

## Brief Description of the Drawings

FIG. 1 is an overall configuration diagram schematically showing one example of an ink jet recording apparatus for

use in the present invention;

FIG. 2 is a perspective view showing a configuration of an ink jet head of the ink jet recording apparatus of the invention (for ease in understanding, the edge of the guard electrode at each ejection part is not shown); and

FIG. 3 is a side cross sectional view showing the distribution state of charged particles when the number of the ejection parts of the ink jet head to be used is large (corresponding to a view along arrow direction X-X of FIG. 2).

**Detailed Description of the Invention**

Below, the present invention will be described in more details.

[Dispersion medium]

The dispersion medium is preferably a dielectric liquid having a high electric resistivity, specifically, $10^{10}$ Ωcm or more. Use of a dispersion medium with a low electric resistivity causes an electrical conduction between the adjacent recording electrodes, and hence it is not suitable for this embodiment. Whereas, the relative dielectric constant of the dielectric liquid is preferably 5 or less, more preferably 4 or less, and further preferably 3.5 or less. Setting of the relative dielectric constant within such a range allows an electric field to effectively act on the charged particles in the dielectric liquid, and hence it is preferred.

As the dispersion mediums for use in the invention, there are a straight chain or branched aliphatic hydrocarbon, an alicyclic hydrocarbon, or an aromatic hydrocarbon, and halogen-substituted forms of these hydrocarbons, a silicone oil, and the like. For example, hexane, heptane, octane, isooctane, decane, isodecane, decaline, nonane, dodecane, isododecane, cyclohexane, cyclooctane, cyclodecane, toluene, xylene, mesitylene, Isoper C, IsoperE, Isoper G, Isoper H, Isoper L, and Isoper M (Isoper: trade name from Exxon Co.), Shellsol 70 and Shellsol 71 (Shellsol: trade name from Shell Oil Co.), Amsco OMS and Amsco 460 solvents (Amsco : trade name from Spirits Co.), and KF-96L (trade name from Shinetsu Silicone Co.) may be used alone or in a mixture thereof. The content of the dispersion medium based on the total amount of the ink composition preferably falls within a range of 20 to 99 mass%. (In this specification, mass% is equal to weight%.) At 20 mass% or more, it is possible to favorably disperse the particles containing a coloring material in the dispersion medium. Whereas, at 99 mass% or less, it is possible to ensure the sufficient content of the coloring material.

The primary particles in the invention contain at least a coloring material and a polymer as described previously. Below, these components will be described.

[Coloring material]

As the coloring materials for use in the invention, known dyes andpigmentsmaybeused, and may be selected according to the intended use and the object. For example, from the viewpoint of the color tone of the recorded image recordedmatter (printedmatter), a pigment is preferably used (see, e.g., Gannryou Bunnsannannteika to Hyoumennsyori Gijyutsu / Hyouka issued from Technical Information Institute Co., Ltd., Dec., 25, 2001, the first printing). Bychanging the coloring material, it is possible to form inks of four colors of yellow, magenta, cyan, and black. Particularly, use of an ink for offset printing or a pigment for use in proof is preferred because the same color tone as that of an offsetprintedmattermaybe obtained.

Examples of the pigment for an yellow ink may include monoazo pigments such as C.I. Pigment Yellow 1 and C.I. Pigment Yellow 74, disazo pigments such as C.I. Pigment Yellow 12 and C.I. Pigment Yellow 17, non-benzidine type azo pigments such as C.I. Pigment Yellow 180, azo lake pigments such as C.I. Pigment Yellow 100, condensed azo pigments such as C.I. Pigment Yellow 95, acidic dye lake pigments such as C.I. Pigment Yellow 115, basic dye lake pigments such as C.I. Pigment Yellow 18, anthraquinone type pigments such asflavanthrone yellow,isoindolinone pigments such asisoindolinone yellow 3RLT, quinophthalone pigments such as quinophthalone yellow, isoindoline pigments such as isoindoline yellow, nitroso pigments such as C.I. Pigment Yellow 153, metal complex salt azomethine pigments such as C.I. Pigment Yellow 117, and isoindolinone pigments such as C.I. Pigment Yellow 139.

Examples of the pigment for a magenta ink may include monoazo pigments such as C.I. Pigment Red 3, disazo pigments such as C.I. Pigment Red 38, azo lake pigments such as C.I. Pigment Red 53:1, or the like, and C.I. Pigment Red 57:1 or the like, condensed azo pigments such as C.I. Pigment Red 144, acidic dye lake pigments such as C.I. Pigment Red 174, basic dye lake pigments such as C.I. Pigment Red 81, anthraquinone type pigments such as C.I. Pigment Red 177, thioindigo pigments such as C.I. Pigment Red 88, perynone pigments such as C.I. Pigment Red 194, perylene pigments such as C.I. Pigment Red 149, quinacridone pigments such as C.I. Pigment Red 122, isoindolinone pigments such as C.I. Pigment Red 180, and alizarin lake pigments such as C.I. Pigment Red 83.

Examples of the pigment for a cyan ink may include disazo type pigments such as C.I. Pigment Blue 25, phthalocyanine pigments such as C.I. Pigment Blue 15, acidic dye lake pigments such as C.I. Pigment Blue 24, basic

dye lake pigments such as C.I. Pigment Blue 1, anthraquinone type pigments such as C.I. Pigment Blue 60, and alkali blue pigments such as C.I. Pigment Blue 18.

Examples of the pigment for a black ink may include organic pigments such as aniline black type pigments, iron oxide pigments, and carbon black pigments such as furnace black, lampblack, acetylene black, and channel black.

Further, processed pigments typified by Microlith pigments such as Microlith-A, -K, and-Tmayalsobepreferablyused. Specific examples thereof may include Microlith Yellow 4G-A, Microlith Red BP-K, Microlith Blue 4G-T, and Microlith Black C-T.

Further, calcium carbonate or titanium oxide pigments may be used as the pigments for a white ink; an aluminum powder, for a silver ink; and a copper alloy, for a gold ink. As with such or other cases, various pigments may be used, if required.

As for the pigment, it is preferable from the viewpoint of the ease of ink manufacturing that one pigment is basically used for one color. However, for hue adjustment, for example, phthalocyanine is mixed in carbon black for a black ink. As with such or other cases, it is also preferable that two or more pigments may be used in combination. Whereas, the pigment may be used after having undergone a surface treatment by a known method such as rosin treatment (the foregoing GannryouBunnsannannteika to Hyoumennsyori Gijyutsu / Hyouka).

It is preferable that the content of the pigment based on the total amount of the ink composition falls within a range of 0.1 to 50 mass%. At 0.1 mass% or more, a sufficient amount of a pigment is ensured, and sufficiently favorable coloration can be obtained in a printed matter. Whereas, at 50 mass% or less, it is possible to favorably disperse particles containing a coloring material in a dispersionmedium. The content is further preferably 1 to 30 mass%.

[Polymer (coating material)]

The primary particles in the invention have been formed in particles by a coloring material such as the foregoing pigment and a polymer (coating material). By using the coating material, it is possible to shield the electric charges possessed by the coloring material, and to impart desirable charging characteristics. Whereas, in this embodiment, after performing ink jet recording on a to-be-recorded medium, fixation is performed by a heating means such as a heat roller. In this step, the coating material is molten by heat, so that fixation can be carried out with efficiency.

Examples of the coating material may include rosins, rosin-modified phenol resin, alkyd resin, (meth) acryl type polymer, polyurethane, polyester, polyamide, polyethylene, polybutadiene, polystyrene, vinyl polyacetate, acetal-modified products of polyvinyl alcohol, and polycarbonate. Out of these, from the viewpoint of the ease of particle formation, a polymer having a mass average molecular weight falling within a range of 2,000 to 1, 000, 000, and a degree of polydispersion (mass average molecular weight /number average molecular weight) falling within a range of 1.0 to 5.0 is preferred. Further, from the viewpoint of ease of fixation, a polymer of which at least one of the softening point, the grass transition point and the melting point falls within a range of 40 °C to 120 °C is preferred.

In the invention, the polymer to be particularly preferably used as the coating material is a polymer containing at least one of the structural units represented by the following formulae (1) to (4).

Formula (1) 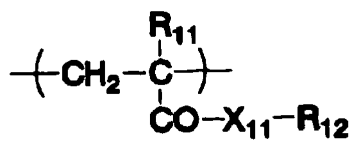

Formula (2) 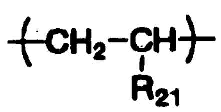

Formula (3) 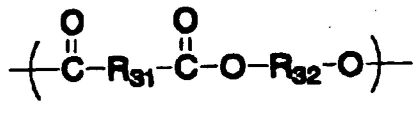

Formula (4) 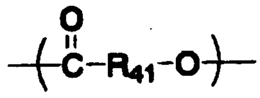

Where in the formula, $X_{11}$ denotes an oxygen atom or -N($R_{13}$)-; $R_{11}$ denotes a hydrogen atom or a methyl group; $R_{12}$ denotes a hydrocarbon group having 1 to 30 carbon atoms; $R_{13}$ denotes a hydrogen atom or a hydrocarbon group having 1 to 30 carbon atoms; $R_{21}$ denotes a hydrogen atom or a hydrocarbon group having 1 to 20 carbon atoms; and $R_{31}$, $R_{32}$ and $R_{41}$ each independently denotes a divalent hydrocarbon group having 1 to 20 carbon atoms; incidentally, in the hydrocarbon groups of $R_{12}$, $R_{21}$, $R_{31}$, $R_{32}$, and $R_{41}$, an ether bond, an amino group, a hydroxy group, or, a halogen substituent may be contained.

The polymer containing the structural unit represented by the general formula (1) can be obtained by radical polymerizing the corresponding radical polymerizable monomers by a known method. Examples of the radical polymerizable monomer to be used may include (meth)acrylic acid esters such as methyl (meth)acrylate, ethyl (meth) acrylate, propyl (meth) acrylate, butyl (meth) acrylate, hexyl (meth) acrylate, octyl (meth) acrylate, 2-ethylhexyl (meth) acrylate, dodecyl (meth)acrylate, stearyl (meth)acrylate, cyclohexyl (meth)acrylate, phenyl (meth) acrylate, benzyl (meth) acrylate, and 2-hydroxyethyl (meth)acrylate, and (meth)acrylamides such as N-methyl (meth)acrylamide, N-propyl (meth)acrylamide, N-phenyl(meth)acrylamide, and N,N-dimethyl (meth)acrylamide.

The polymer containing the structural unit represented by the general formula (2) can be obtained by radical polymerizing the corresponding radical polymerizable monomers by a known method. Examples of the radical polymerizable monomer to be used may include ethylene, propylene, butadiene, styrene, and 4-methyl styrene.

The polymer containing the structural unit represented by the general formula (3) can be obtained by dehydrating and condensing the corresponding dicarboxylic acid or acid anhydride and diol by a known method. As the dicarboxylic acids to be used, mention may be made of succinic acid anhydride, adipic acid, sebacic acid, isophthalic acid, terephthalic acid, 1, 4-phenylene diacetic acid, diglycolic acid, and the like. Whereas, as the diols to be used, mentionmaybe made of ethylene glycol, 1,2-propane diol, 1, 3-propane diol, 1,4-butane diol, 1,6-hexane diol, 1,10-decane diol, 2-butene-1,4-diol, 1,4-cyclohexane diol, 1,4-cyclohexane dimethanol, 1,4-benzene dimethanol, diethylene glycol, and the like.

The polymer containing the structural unit represented by the general formula (4) can be obtained by dehydrating and condensing the corresponding carboxylic acid having a hydroxy group by a known method, or ring-opening polymerizing a cyclic ester of the corresponding carboxylic acid having a hydroxy group by a known method. As the carboxylic acids having a hydroxy group or cyclic esters thereof, mention may be made of 6-hydroxyhexanoic acid, 11-hydroxyundecanoic acid, hydroxybenzoic acid, ε-caprolactone, and the like.

The polymer containing at least one of the structural units represented by the general formulae (1) to (4) may be a homopolymer of each structural unit represented by the general formulae (1) to (4), or may be a copolymer with other component. Whereas, these polymers may be used alone, or may be used in combination of two or more thereof as a coating material.

The content of the coating material based on the total amount of the ink composition preferably falls within a range of 0.1 to 40 mass%. At 0.1 mass% or more, a sufficient amount of the coating material is ensured, and sufficient fixability can be obtained, while at 40 mass% or less, it is possible to favorably form particles containing a coloring material and a coating material.

Then, the secondaryparticles in the inventionwill be described. The secondary particle is a particle not containing a coloring material, and containing at least a polymer.

Examples of the polymer in the secondary particle may include poly(meth)acrylate, polystyrene, polyethylene, polyurethane, polyester, polyvinyl acetate, andnovolakresin. Further, a polymer containing at least one of the structural units represented by the general formulae (1) to (4), usable as the coating material in the primary particle is also preferred.

The polymer in the secondary particle may be the same as, or different from the polymer for use in the primary particle.

The glass transition temperature (Tg) of the polymer in the secondary particle is 20 to 120 °C, and preferably 30 to 100 °C. Incidentally, the Tg of the secondary particle is preferably equal to, or lower than the Tg of the polymer for use in the primary particle. For example, the Tg of the secondary particle is preferably lower than the Tg of the primaryparticle by 0 to 50 °C, and further preferably than that by 0 to 30 °C.

Themass averagemolecularweight of the polymer in the secondary particle preferably falls within a range of 2,000 to 1,000,000, and further preferably within a range of 3, 000 to 500, 000. Whereas, the degree of polydispersion (mass average molecular weight /number average molecular weight) preferably falls within a range of 1.0 to 5.0.

The secondary particles can be prepared by known non-aqueous dispersion polymerization, aqueous suspension polymerization, aqueous emulsion polymerization, or the like. Preferably, the same dispersion medium as the dispersion medium used for preparing the primary particles is preferably used to prepare the secondary particles.

[Dispersant]

In the invention, it is further preferable to use a dispersant in order to control the particle diameter of the coloring material particle, and to suppress the sedimentation of the particles.

As preferred dispersants, mention may be made of surfactants typified by sorbitan fatty acid esters such as sorbitan monooleate, and polyethylene glycol fatty acid esters such as polyoxyethylene distearate. Whereas, for example, mention may be made of a copolymer of styrene and maleic acid, and an amine-modified product thereof, a copolymer of styrene and (meth) acryl compound, a (meth) acryl type polymer, a copolymer of polyethylene and a (meth)acryl compound, rosin, BYK-160, -162, -164, and -182 (polyurethane type polymers manufactured by BYK-Chemie Japan KK), EFKA-401 and -402 (acryl type polymers manufactured by EFKA Co.), and Solsperse 17000 and 24000 (polyester type polymers manufactured by zeneca Group Plc.). In the invention, from the viewpoint of the long-term storage stability of the ink composition, a polymer with a mass average molecular weight falling within a range of 1, 000 to 1, 000, 000, and with a degree of polydispersion (mass average molecular weight /number average molecular weight) falling within a range of 1.0 to 7.0 is preferred. Further, it is most preferable to use a graft polymer or a block polymer.

The polymer to be in particular preferably used in the invention is a graft polymer at least containing a polymer component including at least any one of the structural units represented by the following general formulae (5) and (6), and a polymer component containing at least the structural unit represented by the following general formula (7) as a graft chain.

Formula **(5)**

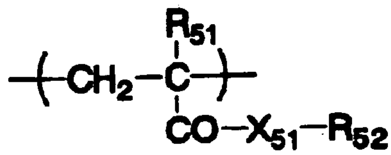

Formula **(6)**

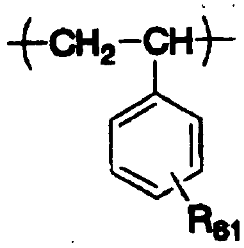

Formula **(7)** 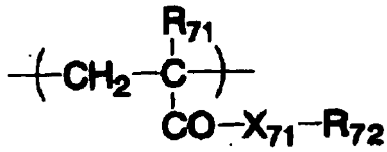

Where in the formula, $X_{51}$ denotes an oxygen atom or $-N(R_{53})$; $R_{51}$ denotes a hydrogen atom or a methyl group; $R_{52}$ denotes a hydrocarbon group having 1 to 10 carbon atoms; $R_{53}$ denotes a hydrogen atom or a hydrocarbon group having 1 to 10 carbon atoms; $R_{61}$ denotes a hydrogen atom, a hydrocarbon group having 1 to 20 carbon atoms, a halogen atom, a hydroxyl group, or, an alkoxy group having 1 to 20 carbon atoms; $X_{71}$ denotes an oxygen atom or $-N(R_{73})-$; $R_{71}$ denotes a hydrogen atom or a methyl group; $R_{72}$ denotes a hydrocarbon group having 4 to 30 carbon atoms; $R_{73}$ denotes a hydrogen atom or a hydrocarbon group having 1 to 30 carbon atoms; incidentally, in the hydrocarbon groups of $R_{52}$ and $R_{72}$, an ether bond, an amino group, a hydroxy group, or, a halogen substituent may be contained.

The graft polymer can be obtained by polymerizing the radical polymerizable monomers corresponding to the general formula (7), preferably, in the presence of a chain transfer agent, introducing a polymerizable functional group to the end of the resulting polymer, and further performing copolymerization with the radical polymerizable monomers corresponding to the general formula (5) or (6).

Examples of the radical polymerizable monomer corresponding to the general formula (5) may include (meth) acrylic acid esters such as methyl (meth)acrylate, ethyl (meth)acrylate, propyl (meth)acrylate, butyl (meth)acrylate, hexyl (meth)acrylate, cyclohexyl (meth)acrylate, phenyl (meth)acrylate, benzyl (meth) acrylate, and 2-hydroxyethyl (meth) acrylate, and (meth)acrylamides such as N-methyl (meth)acrylamide, N-propyl (meth)acrylamide, N-phenyl (meth)acrylamide, and N,N-dimethyl (meth)acrylamide.

Examples of the radical polymerizable monomer corresponding to the general formula (6) may include styrene, 4-methyl styrene, chlorostyrene, and methoxy styrene.

Whereas, examples of the radical polymerizable monomer corresponding to the general formula (7) may include hexyl (meth)acrylate, octyl (meth)acrylate, 2-ethylhexyl (meth)acrylate, dodecyl (meth)acrylate, and stearyl (meth)acrylate.

Specific examples of these graft polymers may include the polymers represented by the following structural formulae:

[BZ-1] 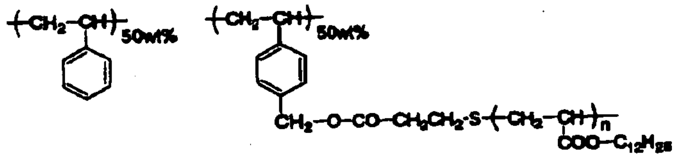

[BZ-2] 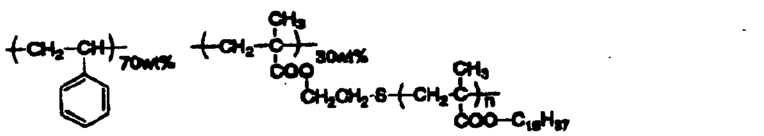

[BZ-3] 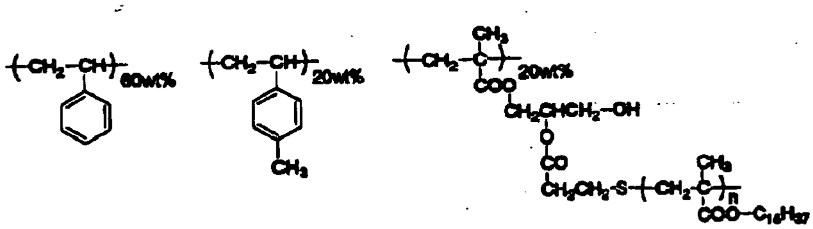

[BZ-4] 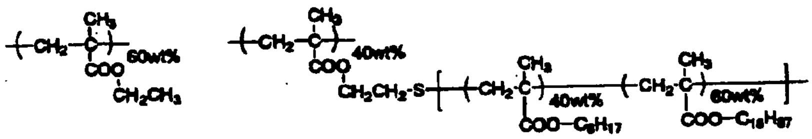

[BZ-5] 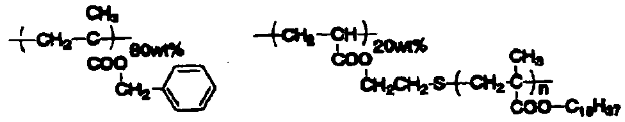

[BZ-6] 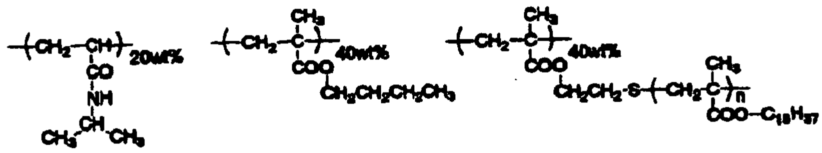

The graft polymer containing a polymer component including at least any one of the structural units represented by the general formulae (5) and (6), and a polymer component containing at least the structural unit represented by the general formula (7) as a graft chain may have only the structural units represented by the general formulae (5) and/or (6), and the general formula (7), or may contain other structural components. The preferred composition ratio of the polymer components having a graft chain and other polymer components is 10 : 90 to 90 : 10. Within this range, favorable particle formability can be obtained, and desired particle diameter is easy to obtain, and hence the composition ratio within this range is preferred. These polymers may be used alone, or may be used in combination of two or more thereof as a dispersant.

The content of the dispersant based on the total amount of the ink composition preferably falls within a range of 0.01 to 30 mass%. Within this range, the favorable particle formability can be obtained, and desirable particle diameter can be obtained.

[Charge control agent]

In the invention, it is further preferable to use a charge control agent in combination in order to control the amount of charge of the particles.

As preferred charge control agents, mention may be made of metallic salts of organic carboxylic acids such as naphthenic acid zirconium salt and octenoic acid zirconium salt; ammonium salts of organic carboxylic acids such as stearic acid tetramethylammonium salt, metallic salts of organic sulfonic acids such as dodecylbenzenesulfonic acid sodium salt and dioctylsulfosuccinic acid magnesium salt; ammonium salts of organic sulfonic acids such as toluenesulfonic acid tetrabutyl ammonium salt, polymers each having a carboxylic acid group in the side chain such as a polymer containing a carboxylic acid group obtained by modifying a copolymer of styrene and maleic anhydride with an amine, polymers each having a carboxylic acid anion group in the side chain such as a copolymer of stearyl methacrylate and tetramethylammonium salt of methacrylic acid, polymers each having a nitrogen atom in the side chain such as a copolymer of styrene and vinylpyridine, polymers each having an ammonium group in the side chain such as a copolymer of butyl methacrylate and N-(2-methacryloyloxyethy.l)-N,N,N-trimethylammonium tosylate salt, and the like. The charge to be imparted to the particles may be either positive charge or negative charge. The content of the charge control agent based on the total amount of the ink composition preferably falls within a range of 0.0001 to 10 mass%.

[Other components]

In the invention, further, an antiseptic agent for preventing corruption, a surfactant for controlling the surface

tension, or the like can be contained according to the intended purpose.

Then, a method for preparing the ink composition of the invention will be described. The ink composition of the invention is preferably manufactured through the following process. A mixture of a coloring material and a polymer (coating material) is wet dispersed together with beads for dispersion in a dispersion medium to obtain primary particles. Thereafter, secondary particles are deposited on the surfaces of the primary particles.

As the beads for dispersion, mention may be made of beads made of steel, glass beads, and beads made of ceramics such as zirconia, titania, alumina, and silicon nitride, and the like. Desirably, the particle diameter of the beads is 0.05 to 5 mm, and further preferably 0.1 to 3 mm. Incidentally, in order to formmicroparticles with a desirable particle diameter, the dispersion stepmaybe carried out plural times by changing the type and the particle diameter of the beads for dispersion.

Examples of the apparatus for use in dispersion may include apaintshaker, a kneader, adissolver, amixer, a high speed disperser, a sand mill, a roll mill, a ball mill, an attritor, and a beads mill (dyno mill)(the foregoing Gannryou Bunnsannannteika to Hyoumennsyori Gijyutsu / Hyouka).

The temperature of the wet dispersion step is preferably lower than the glass transition temperature and the softening point of the polymer in the primary particles. Whereas, the time of the wet dispersion step is preferably 30 minutes to 10 hours. Desirably, the primary particles in the dispersion after the completion of the wet dispersion step obtained in this manner has a volume average particle diameter of less than 2.0 μm, and preferably 0.1 to 1.50 μm. The microparticles each has a particle diameter smaller than the objective desirable particle diameter.

Incidentally, the mixture of a coloring material and a polymer can be obtained by drymixing both the components. As the apparatuses for use in this step, mention may be made of the foregoing dispersion apparatuses. Whereas, the longer diameter / shorter diameter of the power particles obtained by dry mixing preferably falls within a range of 1 to 5. Further, the ratio of the volume average particle diameter / number average particle diameter of the powder particles is preferably 10 or less.

After the completion of the wet dispersion step, preferably, the beads for dispersion are removed, and then, the secondary particles are added, and the secondary particles are deposited on the surfaces of the primary particles. With the deposition of the secondary particles, the coloring material exposed at the surfaces of the primary particles is covered, so that the interaction between the coloring material particles is suppressed. Incidentally, in the step of depositing the secondary particles, a heat treatment is preferably carried out. By carrying out a heat treatment, the secondary particles flows, and cover the surfaces of the primary particles, which enables the coloringmaterial to be further covered.

The heating temperature of the heat treatment step is preferably higher than the glass transition temperature of the polymer in the secondary particle, and may be appropriately determined by the type of the polymer. For example, it is preferably 35 to 120 °C. Whereas, the time of the heat treatment step is preferably 30 minutes to 10 hours. The coloring material particles after the completion of the wet dispersion step obtained in this manner has a volume average particle diameter preferably falling within a range of 0.7 μm to 5.0 μm, and more preferably 0.7 to 3.0 μm. Further, desirably, the volume average particle diameter of the coloring material particles after the completion of the heat treatment step is 1.1 times or more, and preferably 1.3 time or more the volume average particle diameter of the primary particles after the completion of the wet dispersion step.

Incidentally, desirably, the amount of the secondaryparticles to be used is 1 to 50 mass%, and preferably 3 to 30 mass% in the coloring material particles.

From the foregoing, the particle diameter of the secondary particle is preferably equal to, or smaller than the particle diameter of the primary particle. For example, the volume average particle diameter of the secondary particles is 0.01 to 1. 0 μm, and preferably 0.05 to 0.5 μm.

The volume average diameter of the particles can be measured by a centrifugal sedimentation method by means of an apparatus such as a super centrifugal automatic particle size distribution measuring apparatus CAPA-700 (manufactured by Horiba Seisakusho Co., Ltd.). The volume average particle diameter of the particles can be adjusted according to the type and the amount of the dispersant to be used, and the apparatus for use in dispersion.

As described above, a conventional ink composition is manufactured in the following manner. A coloring material and a polymer are heated and kneaded, and then, ground in the dry state, resulting in particles. A dispersion medium and a dispersant are added thereto, so that the particles are made fine, and dispersed in the dispersion medium. Further, a charge control agent is added thereto to impart charge to the particles. However, with the conventional ink composition, particles are deposited in the nozzle of the ink jet head of an ink jet recording apparatus, so that clogging unfavorably tends to occur. Further, the particles sediment upon long-term storage, and are not redispersed even with stirring, unfavorably resulting in poor storage stability.

In the invention, with the deposition of the secondaryparticles on the surfaces of the primary particles, the coloring material exposed at the surfaces of the primary particles is covered, so that the interaction between the coloring material particles is suppressed. Whereas, by preferably carrying out a heat treatment in the step of depositing the secondary particles, the secondary particles flow, and cover the surfaces of the primary particles, so that the coloring material is further covered. As a result of this, the interaction between the particles based on the presence of the coloring

material is suppressed, and further the charge possessed by the coloring material is covered, which enables desirable charge characteristics to be imparted thereto.

More specifically, for the microparticles manufactured in the wet dispersion step, the pigment is exposed at each particle surface by the strong action of the beads for dispersion. As a result, the interaction between the particles is strong, and the particles tend to be dried and deposited on the nozzle of the ink jet head. Further, the particles become more likely to aggregate upon storage. However, in the invention, as described above, the coloringmaterial is covered with the secondary particles, and hence the interaction acting between the particles is suppressed. As a result, the drying and deposition are less likely to occur, and the aggregation upon storage is also reduced.

Incidentally, the charge control agent may be added either during the wet dispersion step or during the heat treatment step.

In the invention, desirably, the coloring material particles have a redispersibility in the dispersion medium falling within a range of 50 to 100 %, and preferably 70 to 100 %. Therefore, for example, for the ink composition including the particles dispersed in the dispersion medium, the redispersibility in the dispersion medium falls within a range 50 to 100 %, and preferably 70 to 100 %.

Herein, the redispersibility referred to in the invention denotes the mass percent of the solid redispersed in the following step. A composition containing color material particles and a dispersion medium is dried, and the dispersion medium is vaporized, resulting in a solid. To the solid, the dispersion medium is added, and the solid is redispersed (dissolved) therein. The redispersibility is the value measured with the following measuring method.

[Specific measurement method of redispersibility]

Ten grams of the composition is spread in a Petri dish, and air dried under room temperature (dried for 1 hour when Isoper G is used as the dispersion medium), resulting in a solid.

To the resulting solid, 10 g of a dispersion medium is added, and the mixture is allowed to stand still under room temperature for 30 minutes.

This mixture is filtrated through a 42-μm nylon mesh.

The residue on the nylon mesh is air dried under room temperature.

The redispersibility is calculated from the following expression:

$$[(\text{Mass of solid} - \text{Mass of residue}) / \text{Mass of solid}] \times 100\ (\%)$$

Preferably, as the ink compositions for use in the invention, an ink composition for initial filling and an ink composition for refilling (replenishing) are prepared. In order to compensate for the reduction of the concentration of the particles due to the ejection of the ink composition for initial filling, refilling of the ink composition for refilling is carried out, and the solid concentration of the ink composition for refilling is set higher than the solid concentration of the ink composition for initial filling.

The solid concentrations of the ink composition for initial filling and the ink composition for refilling have no particular restriction. However, for example, desirably, the solid concentration of the ink composition for initial filling is set at 1 to 40 mass%, and the solid concentration of the ink composition for refilling is set at 2 to 60 mass%, and the ratio of the solid concentrations of the ink composition for initial filling and the ink composition for refilling is set at 1.05 to 10.0, and preferably 1.1 to 7.0 in terms of the latter / the former. By satisfying these conditions, it is possible to obtain favorable ejection characteristics. Whereas, insufficient mixing of the ink composition for initial filling and the ink composition for refilling will not be caused. Incidentally, the preferred solid concentration is 3 to 30 mass% for the ink composition for initial filling, and 5 to 50 mass % for the ink composition for refilling.

Incidentally, the solid concentration can be calculated based on the change in mass when the ink composition has been heated, and the volatile component has been removed. For example, the ink composition is dried on a hot plate at 145 °C for 2 hours, and the calculation can be carried out based on the change in mass.

Whereas, in the invention, desirably, the electric conductivity at 20 °C of the ink composition us 10 pS/cm to 50,000 pS/cm (1 nS/m to 5,000 nS/m) for the ink composition for initial filling, or 50 pS/cm to 100, 000 pS/cm (1 nS/m to 10, 000 nS/m) for the ink composition for refilling. By setting it within this range, it is possible to obtain favorable ejection characteristics. Whereas, further preferably, the electric conductivity of the ink composition for refilling is set higher than that of the ink composition for initial fillingbecause the ejection characteristics can be thereby kept for a long time. The electric conductivity of the ink composition can be adjusted by the types and amounts of the dispersion medium to be used, and the charge control agent.

Whereas, in the invention, the viscosity at 20 °C of the ink composition preferably falls within a range of 0.5 to

50 mPa·S. By setting it within this range, it is possible to obtain favorable ejection characteristics. The viscosity of the ink composition can be adjusted by the types and amounts of the dispersion medium to be used, and the polymer component such as the dispersant dissolved in the dispersion medium. Whereas, by further using a surfactant, it is possible to adjust the viscosity.

[Ink jet recording apparatus]

In the invention, with the ink composition described up to this point, recording is performed on a to-be-recorded medium by an ink jet recording method. In the invention, an ink jet recording method utilizing an electrostatic filed is preferably used. The ink jet recording method utilizing an electrostatic field is the following method. Namely, by applying a voltage across a control electrode and a back electrode at the back of a to-be-recording electrode, the charged particles of the ink composition are concentrated onto the ejection site by the electrostatic force, and flown from the ejection site to a to-be-recorded medium. As for the voltage to be applied across the control electrode and the back electrode, for example, when the charged particles are positive, the control electrode serves as a positive electrode, and the back electrode serves as a negative electrode. Even when the to-be-recorded medium is electrically charged in place of applying a voltage to the back electrode, it is possible to obtain the same effects.

As a method for flying an ink, for example, there is a method in which an ink is flown from the needle-like tip like an injection needle, whereby recording can be carried out by the use of the ink composition. However, it is difficult to refill (replenish) charged particles after concentrating / ejecting charged particles, and it is difficult to perform long term recording with stability. When an ink is circulated in order to forcefully feed charged particles, a method in which the ink is caused to overflow from the injection needle tip is adopted. Therefore, the meniscus shape at the injection needle tip which is the ejection site is not stabilized, so that it is difficult to perform stable recording. Therefore, this method is suitable for short-term recording.

On the other hand, a method in which an ink composition is circulated without causing the ink composition to overflow from the ejection opening is preferably used. For example, there is a method in which an ink is circulated in an ink chamber having an ejection opening and a voltage is applied to a control electrode formed in the periphery of the ejection opening, thereby to flow concentrated ink droplets from the tip of an ink guide present in the ejection opening, and having the tip facing the to-be-recorded medium side. With this method, it is possible to implement both refilling of charged particles by the circulation of the ink and the meniscus stability of the ejection site, and hence, it is possible to perform recording with stability for a long term. Further, with this method, the portion at which the ink comes into contact with the outside air is only the ejection opening and is very small. Accordingly, the vaporization of the solvent is suppressed, so that the ink physical properties become stabilized. Therefore, this method can be suitably used in the invention.

An example of a configuration of the ink jet recording apparatus to which the ink composition of the invention is suitably applied will be shown below.

First, the outline of an apparatus for performing one-side four-color printing on a to-be-recorded medium shown in FIG. 1 will be described. An ink jet recording apparatus 1 shown in Fig. 1 includes an ink circulating system 3 which feeds an ink to an ejection head 2 including ejection heads 2C, 2M, 2Y, and 2K for four colors for performing the full color image formation, and further recovers the ink from the ejection head 2, a head driver 4 for driving the ejection head 2 by the output from an external device such as a computer or RIP not shown, and a position control means 5. Whereas, the ink jet recording apparatus 1 includes a conveyor belt 7 stretched by three rollers 6A, 6B, and 6C, a conveyor belt position detecting means 8 including an optical sensor or the like capable of detecting the position in the direction of width of the conveyor belt 7, an electrostatic adsorption means 9 for holding a to-be-recordedmedium P on the conveyor belt, and a charge eliminating means 10 and a mechanical means 11 for peeling the to-be-recorded medium P from the conveyor belt 7 after the completion of image formation. At upstream and downstream of the conveyor belt 7, a feed roller 12 and a guide 13 for feeding the to-be-recorded medium P to the conveyor belt 7 from a storage cabinet not shown, and a fixing means 14 and a guide 15 for fixing the ink on the to-be-recorded medium P after peeling, and conveying it to a discharged paper storage cabinet not shown are disposed. Whereas, in the inside of the ink jet printing apparatus 1, a to-be-recorded medium position detecting means 16 is provided at the position opposing the ejection head 2 across the conveyor belt 7, and further, a solvent recovery part including an exhaust fan 17 and a solvent vapor adsorbent 18, for recovering the solvent vapor generated from the ink composition, is disposed, so that the vapor inside the apparatus is discharged outside the apparatus through the recovery part.

As the feed roller 12, a known roller can be used, and it is disposed so as to enhance the feeding ability for the to-be-recorded medium. Whereas, on the to-be-recorded medium P, dirt / paper dust, and the like maybe deposited, and hence, these are desirably removed. The to-be-recorded medium P fed by the feed roller is conveyed to the conveyor belt 7 through the guide 13. The back surface (preferably, metal back surface) of the conveyor belt 7 is placed via a roller 6A. The to-be-recorded medium conveyed is electrostatically adsorbed on the conveyor belt by the electrostatic adsorption means 9. In FIG. 1, the electrostatic adsorption is performed by a scorotron charger connected to a negative high voltage power source. By the electrostatic adsorption means 9, the to-be-recorded medium P is electrostatically

adsorbed on the conveyor belt 7 without floating therefrom, and the to-be-recorded medium surface is uniformly charged. Herein, the electrostatic adsorption means is used also as the charging means for the to-be-recordedmedium, but another means may be provided separately. The charged to-be-recorded medium P is conveyed to the ejection head part by the conveyor belt 7, and the charged potential is used as a bias, and superimposed on the recording signal voltage, so that an electrostatic ink jet image is formed.

The to-be-recorded medium P having an image formed thereon is charge-eliminated by the charge eliminating means 10, peeled from the conveyor belt 7 by the mechanical means 11, and conveyed to the fixing part. The to-be-recorded medium P peeled is fed to an image fixing means 14, where fixation is carried out. The to-be-recorded medium P subjected to fixing is discharged to the discharged paper storage cabinet not shown through the guide 15. Further, the apparatus also has a means for recovering the solvent vapor generated from the ink composition. The recovery means includes a solvent vapor absorbent 18. The gas containing the solvent vapor in the apparatus is introduced into the adsorbent by an exhaust fan 17. Thus, the vapor is adsorbed and recovered, and then, discharged outside the apparatus. The apparatus is not limited to the foregoing example, and the number, the shape, the relative configuration, the charged polarity, and the like of constituent devices such as a roller and a charger can be arbitrarily selected. Furthermore, for the system, a description was given by referring to the drawing of a four-color image. However, a system for a more multi-color may be implemented by using light color inks and special color inks in combination.

The ink jet recording apparatus for use in the ink jet printing method includes the ejection head 2 and the ink circulating system 3. The ink circulating system 3 further has an ink tank, an ink circulating device, an ink concentration control device, an ink temperature control device, and the like. In the ink tank, a stirring device may be included.

As the ejection head 2, a single channel head, a multi-channel head or a full line head can be used, and the main scanning is performed by the rotation of the conveyance belt 7.

The ink jet head to be preferably used in the invention is for an ink jet method in which charged particles in the ink flow path are electrophoresed to increase the ink concentration in the vicinity of the opening, and ejecting is carried out. With the method, ejection of ink droplets is carried out by an electrostatic attraction force mainly caused by the to-be-recorded medium or the opposing electrode disposed on the back surface of the to-be-recordedmedium. Therefore, in the case where the to-be-recordedmediumor the opposing electrode does not face the head, or in the case where the to-be-recorded medium or the opposing electrode is not applied with a voltage even when it is at the position facing the head, ejection of ink droplets is not caused, and the inside of the apparatus is not stained even when a voltage is applied by mistake to the ejection electrode or when vibration is applied thereto.

FIGS. 2 and 3 show an ejection head to be preferably used for the above-described ink jet apparatus. As shown in FIGS. 2 and 3, the ink jet head 70 has an electrically insulating substrate 74 forming the top wall of an ink flow path 72 in which a one-way ink flow Q is formed, and a plurality of ejection parts 76 for ejecting an ink toward the to-be-recorded medium P. In every ejection part 76, an ink guide part 78 for guiding ink droplets G flown from the ink flow path 72 toward the to-be-recorded medium P is provided. In the substrate 74, openings 75 through which the ink guide parts 78 are respectively inserted are formed, and an ink meniscus 42 is formed between each ink guide part 78 and the inner wall surface of each opening 75. The gap d between the ink guide part 78 and the to-be-recorded P is preferably about 200 μm to 1,000 μm. Whereas, the ink guide parts 78 are fixed at their respective lower end sides to a supporting rod part 40.

The substrate 74 has an insulating layer 44 for ensuring an electrical insulation between two ejection electrodes at a predetermined distance apart from each other, a first ejection electrode 46 formed on the top side of the insulating layer 44, an insulating layer 48 covering the first ejection electrode 46, a guard electrode 50 formed on the top side of the insulating layer 48, and an insulating layer 52 covering the guard electrode 50. Further, the substrate 74 has a second ejection electrode 56 formed on the bottom side of the insulating layer 44, and an insulating layer 58 covering the second ejection electrode 56. The guard electrode 50 is provided for preventing adjacent ejection parts frombeing affected in terms of electric field by the voltage applied to the first ejection electrode 46 or the second ejection electrode 56.

Further, the ink jet head 70 is provided with a floating conductive plate 62 in the electrically floating state which forms the bottom surface of the ink flow path 72, and drifts the positively charged ink particles (charged particles) R in the ink flow path 72 upwardly (namely, toward the to-be-recorded medium side) by an induced voltage constantly resulting from the pulsed ejection voltage applied to the first ejection electrode 46 and the second ejection electrode 56. Whereas, on the surface of the floating conductive plate 62, an electrically insulating cover film 64 is formed to prevent the physical properties or the components of the ink from becoming unstable by the injection of electric charge into the ink, or the like. The electric resistance of the insulating cover film is preferably $10^{12}$ Ω·cm or more, and more desirably $10^{13}$ Ω·cm or more. Further, the insulating cover film is desirably corrosion-resistant against an ink, which prevents the floating conductive plate 62 from being corroded by the ink. Whereas, the floating conductive plate 62 is covered at the bottom side by an insulating member 66. With such a constitution, the floating conductive plate 62 is completely in an electrically insulated state.

One or more floating conductive plates 62 are provided for every head unit (for example, when C, M, Y and K four heads are present, each head has at least one floating conductive plate, and a floating conductive plate is not shared

in common between C and M head units).

As shown in FIG. 3, in order to fly an ink from the ink jet head 70, and to perform recording on the to-be-recorded P, the ink in the ink flow path 72 is circulated, thereby to achieve the state in which an ink flow Q has been generated, and the guard electrode 50 is applied with a predetermined voltage (for example, +100 V). Further, in order that a flying electric field such that positively charged particles R in the ink droplets G guided by the ink guide part 78 and flown from the opening 75 are attracted up to the to-be-recorded P to be formed between the first ejection electrode 46 and the second ejection electrode 56, and the to-be-recorded P, the first ejection electrode 46, the second ejection electrode 56, and the to-be-recorded P are applied with a positive voltage (the formation of a potential difference of about 1 kV to 3.0 kV when the gap d is 500 μm, serves as a guide.).

In this state, when the first ejection electrode 46 and the second ejection electrode 56 are applied with a pulse voltage in response to an image signal, the ink droplet G elevated in the charged particle concentration is ejected from the opening 75 (for example, when the initial concentration of the charged particles is 3 to 15 %, the charged particle concentration of the ink droplet G becomes 30% or more).

In this step, the voltage value to be applied to the first ejection electrode 4 6 and the second ejection electrode 56 is adjusted such that the ink droplet G is ejected only when a pulse voltage is applied to both the first ejection electrode 46 and the second ejection electrode 56.

When a pulsed positive voltage is applied in this manner, the ink droplet G is flown from the opening 75 under the guidance of the ink guide part 78, and is deposited onto the to-be-recorded medium P, and a positive induced voltage is caused in the floating conductive plate 62 by the positive voltage applied to the first ejection electrode 46 and the second ejection electrode 56.

Even when the voltage applied to the first ejection electrode 46 and the second ejection electrode 56 is in the form of a pulse, the induced voltage is nearly a stationary voltage. Accordingly, the charged particles R positively charged in the ink flow path 72 receive the upwardly moving force due to the electric field formed between the floating conductive plate 62 and the guard electrode 50, and the to-be-recorded medium P, so that the concentration of the charged particles R increases in the vicinity of the substrate 74. As shown in FIG. 3, when the number of the ejection parts (i.e., channels for ejecting ink droplets) used is large, the number of the charged particles necessary for ejection is large. However, the number of the first ejection electrode 46 and the second ejection electrode 56 used increases, and hence the induced voltage induced by the floating conductive plates 62 becomes higher, which also increases the number of the charged particles R to transfer toward the to-be-recorded medium.

In the foregoing description, the example in which the color particles were positively charged was described. However, the color particles may be negatively charged. In that case, the charged polarities all become reversed polarities.

Incidentally, in the invention, after ejecting an ink to a to-be-recordedmedium, the ink is preferably fixed by an appropriate heatingmeans. As the usable heatingmeans, there is usable a contact type heating device such as a heat roller, a heat block, or belt heating, or a non-contact type heating device such as a drier, an infrared lamp, a visible light lamp, an ultraviolet lamp, or a hot air-type oven. The heating device is preferably continuous to and integrated with the ink jet recording apparatus. The temperature of the to-be-recorded medium upon fixing preferably falls within a range of 40 °C to 200 °C from the viewpoint of the ease of fixing. Whereas, the fixing time preferably falls within a range of 1 microsecond to 20 seconds.

[Refilling (Replenishing) of ink composition]

With the ink jet recording method utilizing an electrostatic field, the electrically charged particles (charged particles) in the ink composition are concentrated and ejected. Accordingly, when ejection of the ink composition is carried out for a long period of time, the amount of charged particles in the ink composition decreases in amount, and the electric conductivity of the ink composition decreases. Whereas, the ratio between the electric conductivity of the charged particles and the electric conductivity of the ink composition changes. Further, in ejection, a charged particle having a larger diameter tends to be preferentially ejected than a charged particle having a smaller diameter. Therefore, the average diameter of charged particles decreases. Still further, the content of solid matters in the ink composition changes, and hence, the viscosity also changes.

As a result of these changes in the values of the physical properties, ejection failure occurs, or the reduction of the optical density of the recorded image or the blur of the ink is caused. Such being the case, an ink composition for refilling with a higher concentration (higher solid content concentration) than that of the ink composition for initial filling, initially charged into the ink tank is refilled. As a result, it is possible to prevent the reduction of the concentration of the charged particles, and to keep the electric conductivity of the ink composition within a given range. Further, it is possible to keep the average particle diameter and the viscosity. Furthermore, by keeping the values of the physical properties of the ink composition within a given range, the ink ejection is carried out stably and uniformly for a long period of time. The refilling at this time is preferably performed mechanically or manually, for example, by detecting the values of the physical properties such as the electric conductivity and the optical density of the ink solution used, and calculating the

shortfalls.

Alternatively, the refilling may be performed mechanically or manually by calculating the amount of the ink composition to be used based on the image data.

[To-be-recorded medium]

In the invention, various to-be-recorded mediums can be used according to the intended uses. For example, when paper, a plastic film, a metal, and a plastic- or metal-laminated or vapor-deposited paper, or a metal-laminated or -vapor deposited plastic film is used, a printed matter can be directly obtained by ink jet recording. Alternatively, when a support obtained by roughening the surface of a metal such as aluminum is used, an offset printing plate can be obtained. Further, when a plastic support or the like is used, a flexographic printing plate or a color filter for a liquid crystal screen can be obtained. The to-be-recorded medium may have a planar shape such as a sheet form, or may have a three-dimensional shape such as a cylindrical form. Whereas, when a silicon wafer or a wiring board is used as the to-be-recorded medium, it can be applied to the manufacturing of a semiconductor or a printed wiring board.

[Examples]

Below, the invention will be described in details by way of examples, which should not be construed as limiting the scope of the invention.

[Example 1]

<Used materials>

In Example 1, the following materials were used.

· Cyan pigment (coloring material) phthalocyanine pigment C.I. Pigment Blue (15:3) (LIONOL BLUE FG-7350, manufactured by TOYO INK MFG Co., Ltd.)
· Coating material [AP-1] (see below)
· Dispersant [BZ-2] (see below)
· Charge control agent [CT-1] (see below)
· Dispersion medium Isoper G (manufactured by Exxon Corp.)

The coating material [AP-1] was obtained by radical polymerizing methyl methacrylate, butyl methacrylate, benzyl methacrylate, dodecyl methacrylate, and 2-(N,N-dimethylamino)ethyl methacrylate by the use of a known polymerization initiator.

The mass average molecular weight was 19,000, the degree of polydispersion (mass average molecular weight /number-average molecular weight) was 2.6. The glass transition point (midpoint) was 50 °C.

The dispersant [BZ-2] was obtained in the following manner. Stearyl methacrylate was radical polymerized in the presence of 2-mercapto ethanol, and further allowed to react with a methacrylic anhydride, thereby to obtain a polymer (with a mass average molecular weight of 7, 600) of stearyl methacrylate having a methacryloyl group at the end. Then, this was radical polymerized with styrene. The mass average molecular weight was 110,000.

The charge control agent [CT-1] was obtained by allowing a copolymer of 1-octadecene and maleic anhydride with 1-hexadecylamine. The mass average molecular weight was 17,000.

<Formation of secondary particle [PP-1] not containing a coloring material and containing at least a polymer>

Thirty grams of the coating material [AP-1] was coarsely pulverized in a trio blender manufactured by Trio Science Co., Ltd., and further finely pulverized in an SK-M10 model sample mill manufactured by Kyoritsu Riko Co., Ltd.). Thirty grams of the finely pulverized product obtained was preliminary dispersed in a paint shaker manufactured by Toyo Seiki Seisaku-Sho, Ltd., together with 15 g of the dispersant [BZ-2], 75 g of Isopar G, and glass beads with a diameter of about 3.0 mm. After removing the glass beads, the mixture was dispersed (reduced to particles) together with zirconia ceramic beads with a diameter of about 0.6 mm in a Type KDL Dyno-mill manufactured by Shinmaru Enterprises Corporation at a number of revolutions of 1, 000 rpm at such a rate as to keep the internal temperature at 0 °C for 8 hours, resulting in secondary particles [PP-1]. The volume average diameter was measured by means of CAPA-700 manufactured by Horiba Seisakusho Co., Ltd., and it was found to be 0.15 $\mu$m.

<Formation of ink composition [DC-1]>

Ten grams of a cyan pigment and 15 g of the coating material [AP-1] were placed in a desktop kneader PBV-0.1 manufactured by Irie Shokai Co., Ltd., and heated and mixed for 2 hours at a heater temperature set at 105 °C. Twenty five grams of the resultingmixture was coarselypulveri zed in a trio blendermanufacturedby Trio Science Co., Ltd., and further finely pulverized in an SK-M10 model sample mill manufactured by Kyoritsu Riko Co., Ltd. Twenty five grams of the finely pulverized product obtained was preliminary dispersed in a paint shaker manufactured by Toyo Seiki Seisaku-Sho, Ltd., together with 7.5 g of the dispersant [BZ-2], 75 g of Isopar G, and glass beads with a diameter of about 3.0 mm. After removing the glass beads, the mixture was dispersed (reduced to particles) together with zirconia ceramic beads with a diameter of about 0.6 mm in a Type KDL Dyno-mill manufactured by Shinmaru Enterprises Corporation at a number of revolutions of 2, 000 rpm at such a rate as to keep the internal temperature at 30 °C for 4 hours, and subsequently at 45 °C for 3 hours. After removing the zirconia ceramic beads from the resulting dispersion, the dispersion was charged in a container made of stainless steel, equipped with a stirrer and a heater, and 20 g of the secondary particles [PP-1], 296 g of Isoper G, and 0.5 g of the charge control agent [CT-1] were added thereto, and the mixture was heated with stirring at 60 °C for 3 hours, resulting in an ink composition [DC-1].

The values of the physical properties of the ink composition [DC-1] were as follows.

The electric conductivity at 20 °C of the ink composition were measured under the conditions of an applied voltage of 5 V and a frequency of 1 kHz by means of an LCR meter (AG-4311 manufactured by Ando Electric Co., Ltd.), and an electrode for liquid (LP-05 manufactured by Kawaguchi Electrics Works Co., Ltd.), and it was found to be 166 nS/m. The charged polarity of the charged particles was positive.

The volume average diameter of the charged particles was measured by means of CAPA-700 manufactured by Horiba Seisakusho Co., Ltd., at a number of revolutions of 5000 rpm, and it was found to be 1.1 μm. The viscosity at 20 °C of the ink composition was measured by means of an E model viscometer manufactured by Tokyo Keiki Co., Ltd., and it was found to be 1.6 mPa·s. Whereas, the redispersibility was found to be 80 %.

In the ink jet recording apparatus shown in FIGS. 1 to 3, 100 g of the ink composition [DC-1] was filled in an ink tank connected with a head. Herein, as an ejection head, a 833-channel head of 150 dpi (three rows in a staggered arrangement of a channel density of 50 dpi) of the type shown in FIG. 2 was used. Whereas, as a fixing means, a heat roller made of silicone rubber including a 1-kW heater built therein was used. An immersion heater and stirring blades were provided as the ink temperature controlling means in the ink tank, and the ink temperature was set at 30 °C. Thus, the temperature was controlled by a thermostat while rotating the stirring blades at 30 rpm. The stirring blades were also used as a stirring means for preventing sedimentation and aggregation. As the to-be-recorded medium, a fine coated paper sheet for offset printing of A2 size was used. After removing dust from the to-be-recorded medium surface by air pump suction, the ejection head was moved to the image forming position to be close to the to-be-recorded medium. Thus, the image data to be recorded was sent to the image data operating and controlling part. While conveying the to-be-recorded medium by the rotation of the conveyor belt, and sequentially moving the ejection head, the ink composition was ejected to form an image with a drawing resolution of 2,400 dpi. As the conveyor belt, the one prepared by bonding a metallic belt with a polyimide film was used, and a linear marker was provided in the direction of conveyance in the vicinity of one side of the belt. This was optically read by a conveyor belt position detecting means, and the position control means was driven to form an image. In this step, the distance between the ejection head and the to-be-recorded medium was maintained at 0.5 mm based on an output from an optical gap detecting device. Whereas, the surface potential of the to-be-recorded medium was set at -1.5 kV for ejection. When ejection was carried out, a pulse voltage of +500 V (with a pulse width of 50 μsec) was applied, so that an image was recorded at a driving frequency of 10 kHz.

Immediately after image recording, fixation was carried out by means of a heat roller. The temperature of coated paper upon fixation was 90 °C, and the contact time with the heat roller was 0.3 second.

Image recording was carried out under the conditions of an image area ratio of 15 %, and recording of 15 sheets of A4 size per day, for 1 week. Then, whether the particles had been deposited in the ejection opening of the ink jet head, or not was examined.

Further, the ink composition was allowed to stand still at room temperature for 1 month, and the sediment was examined.

The results are shown in Table 1.

[Comparative Example 1]

<Formation of ink composition [RC-1]>

Ten grams of a cyan pigment and 20 g of the coating material [AP-1] were placed in a desktop kneader PBV-0.1 manufactured by Irie Shokai Co., Ltd., and heated and mixed for 2 hours at a heater temperature set at 100 °C. Thirty grams of the resulting mixture was coarsely pulverized in a trio blendermanufacturedby Trio Science Co., Ltd.,

and further finely pulverized in an SK-M10 model sample mill manufactured by Kyoritsu Riko Co., Ltd. Thirty grams of the finely pulverized product obtained was preliminary dispersed in a paint shaker manufactured by Toyo Seiki Seisaku-Sho, Ltd., together with 7.5 g of the dispersant (BZ-2), 75 g of Isopar G, and glass beads with a diameter of about 3.0 mm. After removing the glass beads, the mixture was dispersed (reduced to particles) together with zirconia ceramic beads with a diameter of about 0.6 mm in a Type KDL Dyno-mill manufactured by Shinmaru Enterprises Corporation at a number of revolutions of 2,000 rpm at such a rate as to keep the internal temperature at 30 °C for 4 hours, and subsequently at 45 °C for 4 hours. After removing the zirconia ceramic beads from the resulting dispersion, 316 g of Isoper G and 0.5 g of the charge control agent [CT-1] were added thereto, resulting in an ink composition [RC-1]. The electric conductivity of the ink composition was 155 nS/m, the volume average diameter of the charged particles was 0.9 μm, the viscosity was 1.6 mPa·s, and the redispersibility was 30 %.

Table 1

| | Example 1 | Comparative Example 1 |
|---|---|---|
| Ink composition | [DC-1] | [RC-1] |
| 1-Week ink ejection | Good with no clogging in the ejection opening | Ink particles were deposited in the ejection opening, so that ejection became impossible. |
| 1-Month storage | Particles were sedimented, but by stirring, the sediments disappeared. | Particles were sedimented. Stirring was performed, but the sediments remained as they were. |

[Example 2]

<Formation of secondary particles [PP-2] not containing a coloring material, and containing at least a polymer>

Isophthalic acid and hexanediol were dehydrated and condensed, thereby obtaining [AP-2] (see below). The mass average molecular weight was 10,000, the degree of polydispersion (mass average molecular weight /number average molecular weight) was 1.7. The glasstransitionpoint (midpoint) was5°C. By the use of the resulting [AP-2], secondary particles [PP-2] were obtained in the same manner as with [PP-1] of Example 1. The volume average diameter was 0.2 μm.

<Formation of ink composition [DC-2]>

An ink composition [DC-2] was obtained in the same manner as in Example 1, except that [PP-2] was used in place of [PP-1] as the secondaryparticles. The volume average diameter of the charged particles was 1.3 μm, and the redispersibility thereof was 70 %. The ejection performance and the storage stability were evaluated in the same manner as in Example 1. The results are shown in Table 2.

[Example 3]

An ink composition [DC-3] was obtained in the same manner as in Example 1, except that [AP-3] (see below) was used in place of the coating material [AP-1] in Example 1. The volume average diameter of the charged particles was 1.3 μm, and the redispersibility thereof was 85 %. The ejection performance and the storage stability were evaluated in the same manner as in Example 1. The results are shown in Table 2.

[Example 4]

An ink composition [DC-4] was obtained in the same manner as in Example 1, except that [PP-3] was used in place of the secondary particles [PP-1] in Example 1.

[PP-3] are the particles obtained from non-aqueous dispersion polymerization of methyl methacrylate, butyl acrylate, and 2- (N,N-dimethylamino) ethyl methacrylate in an Isoper G solvent by using [BZ-2] as a dispersant. The mass average molecular weight was 0.2 μm, the mass average molecular weight was 31, 000, the degree of polydispersion (mass average molecular weight /number-average molecular weight) was 2.7, and the glass transition point (midpoint) was 45 °C.

The ejection performance and the storage stability were evaluated in the same manner as in Example 1. The results are shown in Table 2.

[Comparative Example 2]

An ink composition [RC-2] was obtained in the same manner as in Comparative Example 1, except that the coating material [AP-1] was changed to [AP-3] in Comparative Example 1.
The volume average diameter of the charged particles was 1.1 μm, and the redispersibility thereof was 35 %.
The ejection performance and the storage stability were evaluated in the same manner as in Example 1. The results are shown in Table 2.

Table 2

| | Example 2 | Example 3 | Example 4 | Comparative Example 2 |
|---|---|---|---|---|
| Ink composition | [DC-2] | [DC-3] | [DC-4] | [RC-2] |
| 1-Week ink ejection | Good with no clogging in the ejection opening | | | Ink particles were deposited in the ejection opening, so that ejection became impossible. |
| 1-Month storage | Particles were sedimented, but by stirring, the sediments disappeared. | | | Particles were sedimented. Stirring was performed, but the sediments remained as they were. |

[Example 5]

<Formation of ink composition [DC-5]>

Ten grams of a cyan pigment and 10 g of the coating material [AP-1] were placed in a desktop kneader PBV-0.1 manufactured by Irie Shokai Co., Ltd., and heated and mixed for 2 hours at a heater temperature set at 100 °C. Twenty grams of the resulting mixture was coarsely pulverized in a trio blender manufactured by Trio Science Co., Ltd., and further finely pulverized in an SK-M10 model sample mill manufactured by Kyoritsu Riko Co., Ltd. Twenty grams of the finely pulverized product obtained was preliminary dispersed in a paint shaker manufactured by Toyo Seiki Seisaku-Sho, Ltd., together with 7.5 g of the dispersant (BZ-2), 75 g of Isopar G, and glass beads with a diameter of about 3.0 mm. After removing the glass beads, the mixture was dispersed (reduced to particles) together with zirconia ceramic beads with a diameter of about 0.6 mm in a Type KDL Dyno-mill manufactured by Shinmaru Enterprises Corporation at a number of revolutions of 2,000 rpm at such a rate as to keep the internal temperature at 30 °C for 4 hours, and subsequently at 45 °C for 3 hours. After removing the zirconia ceramic beads from the resulting dispersion, 40 g of the secondary particles [PP-1], 276 g of Isoper G, and 0.5 g of the charge control agent [CT-1] were added thereto. The resulting mixture was heated with stirring together with zirconia ceramic beads with a diameter of about 0.1 mm in a MULTI LAB manufactured by Shinmaru Enterprises Corporation at a number of revolutions of 500 rpm at such a rate as to keep the internal temperature at 60 °C for 3 hours. The zirconia ceramic beads were removed from the resulting dispersion, resulting in an ink composition [DC-5].
The values of the physical properties of the ink composition [DC-5] were as follows.
The electric conductivity at 20 °C of the ink composition was measured under the conditions of an applied voltage of 5 V and a frequency of 1 kHz by means of an LCR meter (AG-4311 manufactured by Ando Electric Co., Ltd.), and an electrode for liquid (LP-05 model manufactured by Kawaguchi Electrics Works Co., Ltd.), and it was found to be 170 nS/m. The charged polarity of the charged particles was positive.
The volume average diameter of the charged particles was measured by means of CAPA-700 manufactured by Horiba Seisakusho Co., Ltd., at a number of revolutions of 5000 rpm, and it was found to be 1.0 μm. The viscosity at 20 °C of the ink composition was measured by means of an E model viscometer manufactured by Tokyo Keiki Co., Ltd., and it was found to be 1.6 mPa·s. Whereas, the redispersibility was found to be 85 %.
The ejection performance and the storage stability were evaluated in the same manner as in Example 1. The results are shown in Table 3.

Table 3

| | Example 5 |
|---|---|
| Ink composition | [DC-5] |
| 1-Week ink ejection | Good with no clogging in the ejection opening |

Table continued

| | Example 5 |
|---|---|
| Ink composition | [DC-5] |
| 1-Month storage | Particles were sedimented, but by stirring, the sediments disappeared. |

Incidentally, the coating materials, the dispersants, and the charge control agents are shown below.

[AP−1]

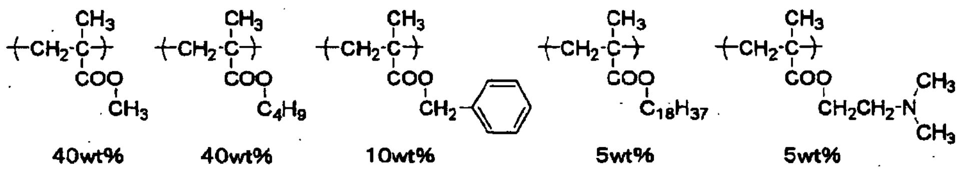

[AP−2]

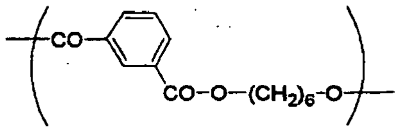

[AP−3]

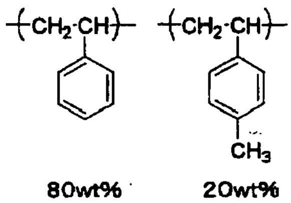

The mass average molecular weight of the coating material [AP-3] was 41,000, the degree of polydispersion (mass average molecular weight /number average molecular weight) thereof was 2.4, and the glass transition point (midpoint) was 65 °C.

[BZ−2] 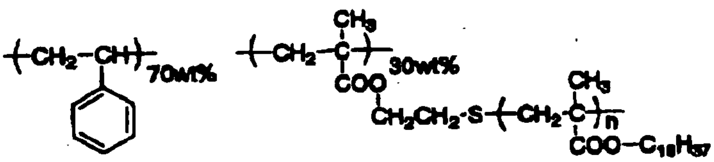

[CT-1] 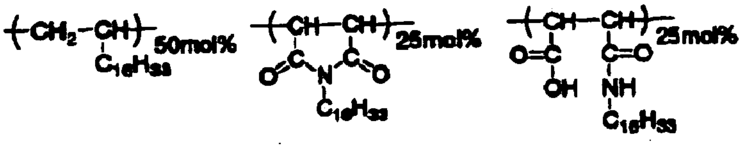

In accordance with the present invention, it is possible to provide an ink composition of which the particles are less likely to be deposited in the nozzle of an ink jet head of an ink jet recording apparatus, and which can also be improved in storage stability, by suppressing the interaction acting between the particles contained in the ink composition, for example, when the ink composition is used for ink jet recording.

The entire disclosure of each and every foreign patent application from which the benefit of foreign priority has been claimed in the present application is incorporated herein by reference, as if fully set forth.

## Claims

**1.** An ink composition comprising:

a dispersion medium; and
coloring material particles comprising:

primaryparticles comprising at least a coloringmaterial and a first polymer; and
secondary particles not comprising a coloring material, and comprising at least a second polymer,

wherein the secondary particles are deposited on surfaces of the primary particles.

**2.** The ink composition according to claim 1,
wherein the coloring material particles are charged particles.

**3.** An ink jet recording method comprising:

flowing ink droplets by utilizing an electrostatic field with a use of an ink composition according to claim 2.

**4.** The ink composition according to claim 1,
wherein the first polymer is a polymer comprising at least one of structural units represented by formulae (1) to (4):

Formula (1) 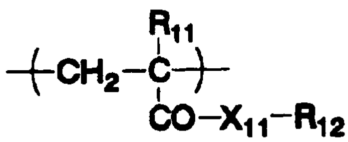

Formula (2) 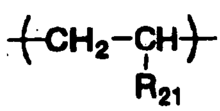

Formula (3)

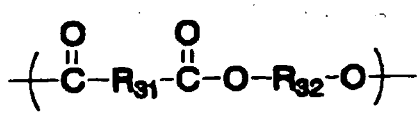

Formula (4)

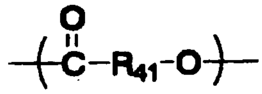

wherein $X_{11}$ represents an oxygen atom or -N($R_{13}$)-;
$R_{11}$ represents a hydrogen atom or a methyl group;
$R_{12}$ represents a hydrocarbon group having 1 to 30 carbon atoms;
$R_{13}$ represents a hydrogen atom or a hydrocarbon group having 1 to 30 carbon atoms;
$R_{21}$ represents a hydrogen atom or a hydrocarbon group having 1 to 20 carbon atoms; and
$R_{31}$, $R_{32}$ and $R_{41}$ each independently represents a divalent hydrocarbon group having 1 to 20 carbon atoms, and wherein in the hydrocarbon groups of $R_{12}$, $R_{21}$, $R_{31}$, $R_{32}$ and $R_{41}$, an ether bond, an amino group, a hydroxy group or a halogen substituent may be contained.

**5.** The ink composition according to claim 1, which further comprises a graft polymer comprising: a polymer component comprising at least any one of structural units represented by formulae (5) and (6) ; and a polymer component comprising at least a structural unit represented by formula (7) as a graft chain:

Formula (5)

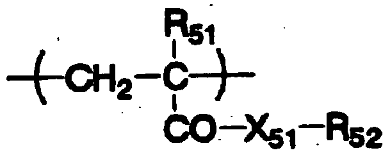

Formula (6)

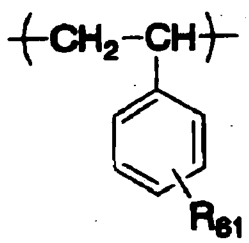

Formula (7)

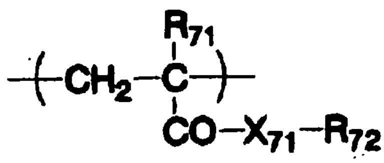

wherein $X_{51}$ represents an oxygen atom or -N($R_{53}$);
$R_{51}$ represents a hydrogen atom or a methyl group;
$R_{52}$ represents a hydrocarbon group having 1 to 10 carbon atoms;
$R_{53}$ represents a hydrogen atom or a hydrocarbon group having 1 to 10 carbon atoms;

$R_{61}$ represents a hydrogen atom, a hydrocarbon group having 1 to 20 carbon atoms, a halogen atom, a hydroxyl group or an alkoxy group having 1 to 20 carbon atoms;
$X_{71}$ represents an oxygen atom or -N($R_{73}$)-;
$R_{71}$ represents a hydrogen atom or a methyl group;
$R_{72}$ represents a hydrocarbon group having 4 to 30 carbon atoms;
$R_{73}$ represents a hydrogen atom or a hydrocarbon group having 1 to 30 carbon atoms, and
wherein in the hydrocarbon groups of $R_{52}$ and $R_{72}$, an ether bond, an amino group, a hydroxy group or a halogen substituent may be contained.

**6.** The ink composition according to claim 1, which further comprises a charge control agent.

**7.** A method for producing a ink composition, the method comprising:

wet dispersing a mixture of a coloring material and a first polymer with beads for dispersion in a dispersion medium, so as to obtain primary particles; and
adding secondaryparticles not comprising a coloring material, and comprising at least a second polymer so that the secondary particles are deposited on surfaces of the primary particles.

**8.** The method for producing a ink composition according to claim 7,
wherein the secondary particles are deposited on the surfaces of the primary particles with a heat treatment.

FIG. 1

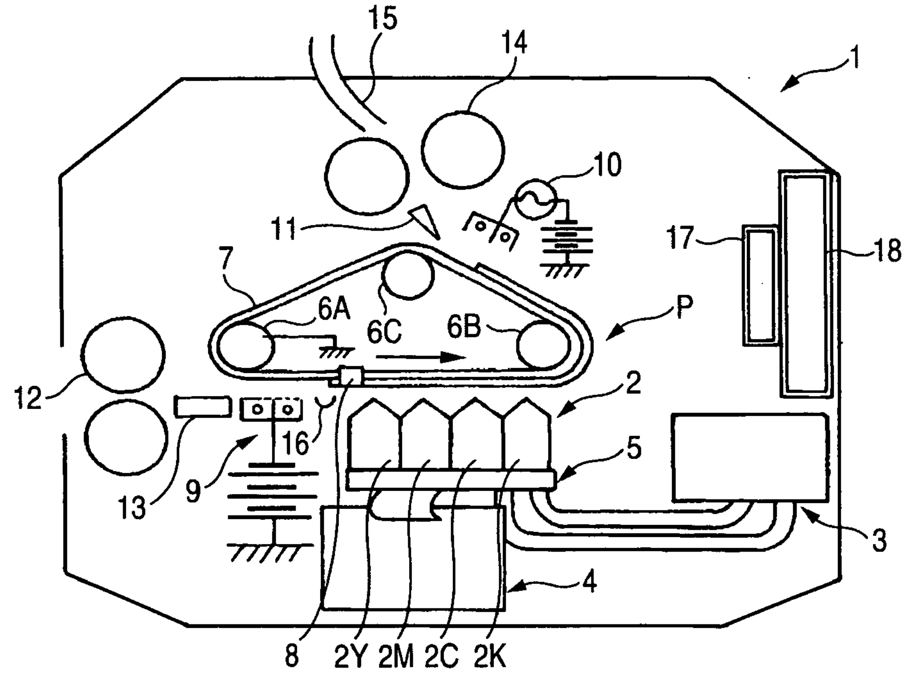

FIG. 2

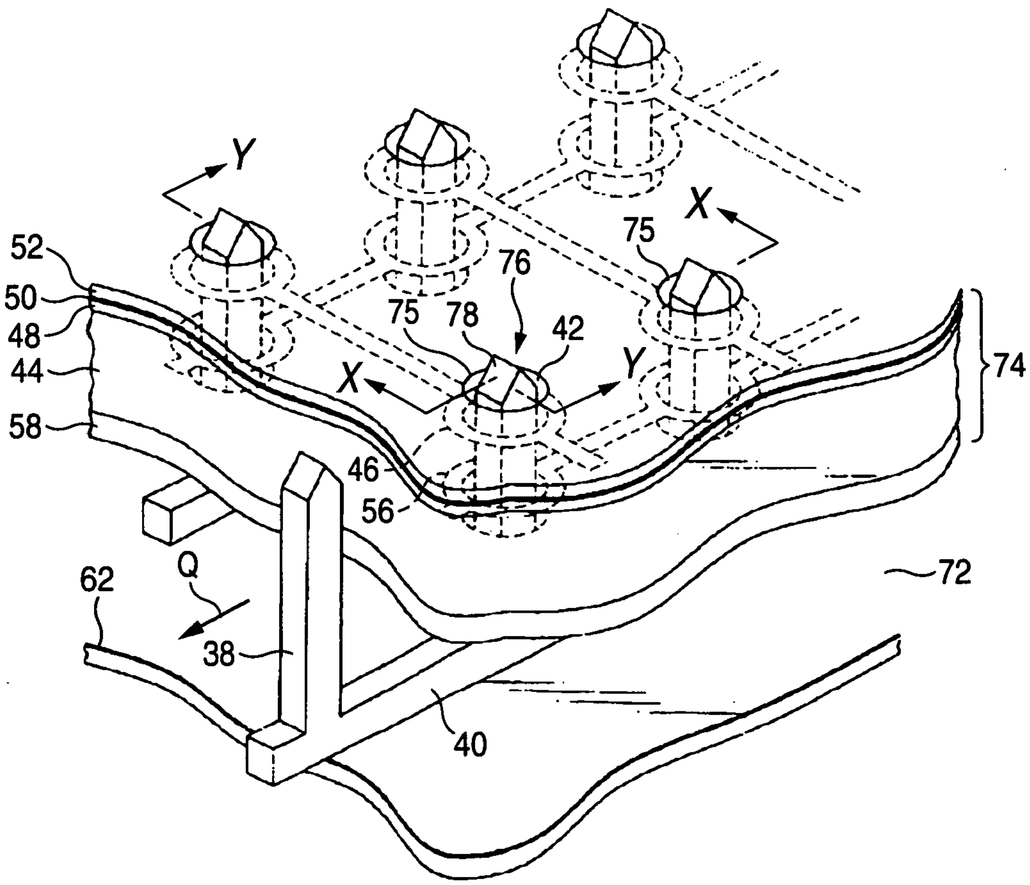

FIG. 3

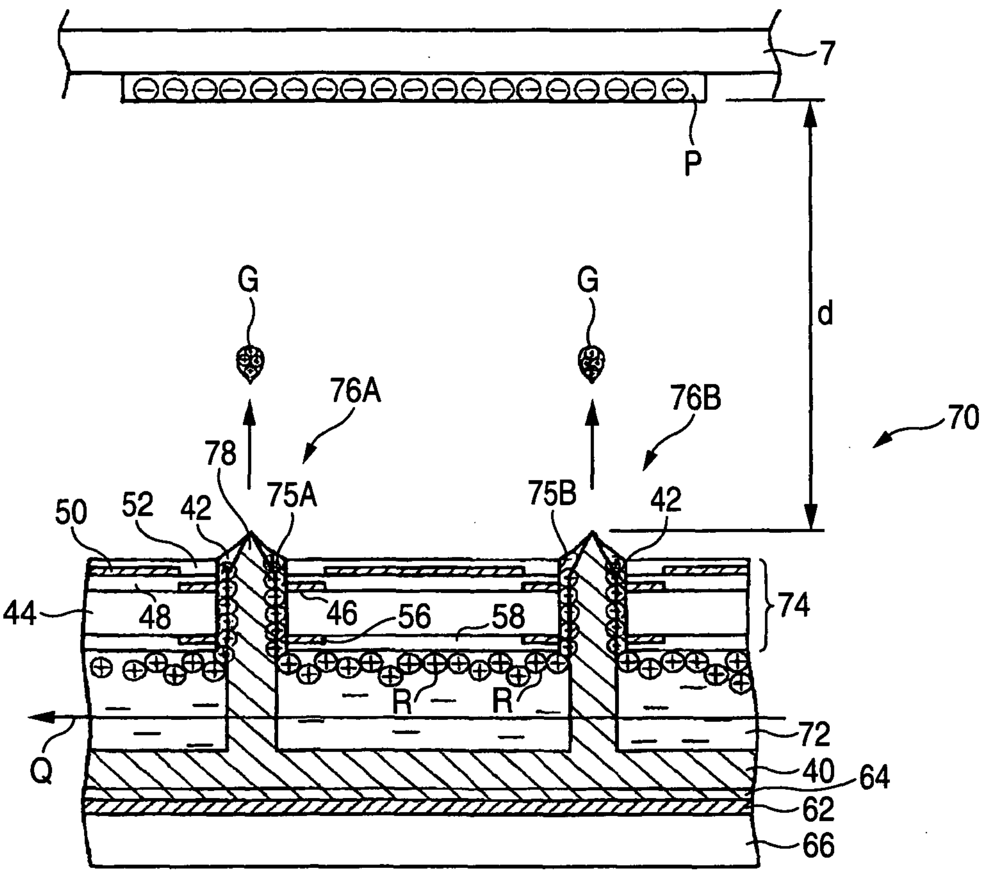
7
P
G
G
d
76A
76B
70
78
75A
75B
50
52
42
42
44
48
46
56
58
74
R
R
72
Q
40
64
62
66

European Patent Office

# EUROPEAN SEARCH REPORT

Application Number
EP 05 02 5634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 471 121 A (FUJI PHOTO FILM CO., LTD) 27 October 2004 (2004-10-27)<br>* examples *<br>----- | 1-8 | C09D11/00 |
| X | EP 1 449 893 A (FUJI PHOTO FILM CO., LTD) 25 August 2004 (2004-08-25)<br>* claims *<br>----- | 1-8 | |
| | | | TECHNICAL FIELDS SEARCHED (IPC) |
| | | | C09D |

The present search report has been drawn up for all claims

| Place of search | Date of completion of the search | Examiner |
|---|---|---|
| Munich | 24 February 2006 | Zeslawski, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................................................
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 05 02 5634

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2006

| Patent document cited in search report | Publication date | Patent family member(s) | Publication date |
|---|---|---|---|
| EP 1471121 A | 27-10-2004 | CN 1539639 A<br>US 2004214920 A1 | 27-10-2004<br>28-10-2004 |
| EP 1449893 A | 25-08-2004 | CN 1523068 A<br>US 2004165050 A1 | 25-08-2004<br>26-08-2004 |

EPO FORM P0459

For more details about this annex : see Official Journal of the European Patent Office, No. 12/82